# EUROPÄISCHE PATENTSCHRIFT

(11) **EP 3 828 052 B1**
(45) Veröffentlichungstag und Bekanntmachung des Hinweises auf die Patenterteilung: **19.07.2023**
(21) Anmeldenummer: 20205600.8
(22) Anmeldetag: 04.11.2020
(51) Int. Cl.: B61C 3/02, B60L 50/50, B60M 7/00, B61L 15/00, B61L 27/00, B60L 50/53, B60M 3/06

(54) **BETREIBEN VON SCHIENENFAHRZEUGEN ZUM BEGRENZEN VON LEISTUNGSSPITZEN IN EINER STROMVERSORGUNG**
OPERATION OF RAILWAY VEHICLES FOR LIMITING POWER PEAKS IN A POWER SUPPLY
FONCTIONNEMENT DE VÉHICULES FERROVIAIRES PERMETTANT DE LIMITER LES PICS DE PUISSANCE DANS UNE ALIMENTATION ÉLECTRIQUE

(30) Priorität: 06.11.2019 DE 102019217148
(43) Veröffentlichungstag der Anmeldung: 02.06.2021
(73) Patentinhaber: Bombardier Transportation GmbH, 10785 Berlin (DE)
(72) Erfinder: Mazzone, Andrea, 8008 Zürich (CH)
(74) Vertreter: Patentanwälte Bressel und Partner mbB

(56) Entgegenhaltungen:
- EP-A1- 0 997 340
- EP-A1- 1 354 752
- EP-A1- 1 359 049
- EP-A1- 3 170 692
- DE-A1- 19 654 960
- DE-A1-102008 037 661
- DE-A1-102013 218 030
- DE-A1-102016 224 125
- JP-A- H07 304 353
- SCHOLTEN J ET AL: "ENERGIESPEICHER AUF GLEICHSTROM-SCHIENENFAHRZEUGEN//ENERGY STORAGE ON BOARD OF DC RAILWAY VEHICLES//ACCUMULATION DE L'ENERGIE A BORD DES VEHICULES FERROVIAIRES ALIMENTES AU C.C", EB- ELEKTRISCHE BAHNEN, DIV-DEUTSCHER INDUSTRIEVERLAG, DE, Bd. 101, Nr. 12, 1. Dezember 2003 (2003-12-01), Seiten 533-538, XP001185167, ISSN: 0013-5437
- AL-EZEE HUSSAIN ET AL: "Aspects of catenary free operation of DC traction systems", 2015 50TH INTERNATIONAL UNIVERSITIES POWER ENGINEERING CONFERENCE (UPEC), IEEE, 1. September 2015 (2015-09-01), Seiten 1-5, XP032823701, DOI: 10.1109/UPEC.2015.7339959 [gefunden am 2015-11-30]

## Beschreibung

Die Erfindung betrifft ein Schienenfahrzeug und ein Verfahren zum Betreiben eines Schienenfahrzeugs. Sämtliche Schienenfahrzeuge sind dabei zumindest teilweise elektrisch angetrieben.

Elektrisch angetriebene Schienenfahrzeuge, die aus einem fahrzeugexternen Versorgungsstromnetz oder, mit anderen Worten, einer fahrzeugexternen Stromversorgung mit elektrischer Energie gespeist werden, sind verbreitet. Dabei greifen die Schienenfahrzeuge zum Beispiel mittels eines Stromabnehmers Strom von einer Stromschiene oder von einer Oberleitung der Stromversorgung ab.

Je nach einer aktuellen Leistungsanforderung (also dem aktuellen Energiebedarf), wie zum Beispiel durch eine Zugkraftanforderung automatisch oder manuell vorgebbar, bezieht das Schienenfahrzeug eine variable Leistung aus der Stromversorgung. Wenn eine Mehrzahl von Verbrauchern (zum Beispiel eine Mehrzahl von Schienenfahrzeugen) der Stromversorgung gleichzeitig elektrische Leistung entnimmt, kann dies zu sogenannten Leistungsspitzen führen. Hierunter können Leistungen innerhalb der Stromversorgung verstanden, die oberhalb eines definierten Schwellenwerts liegen. Diese Leistungen können durch ein Unterwerk der Stromversorgung bereitgestellt bzw. an diesem anfallen oder gemessen werden.

Der Schwellenwert kann zum Beispiel einer bereitgestellten Leistung bzw. Energiemenge entsprechen, für den die Stromversorgung und insbesondere ein etwaiges Unterwerk während eines Regelbetriebs ausgelegt ist. Insbesondere kann der Schwellenwert einem Leistungswert entsprechen, ab dem die Energiekosten, wie sie zum Beispiel durch einen Betreiber des Schienennetzwerks oder der Stromversorgung festgelegt werden, eine bestimmte Preisgrenze überschreiten.

Unter einem Unterwerk kann ein Umspannwerk verstanden werden, das in an sich bekannter Weise dazu eingerichtet ist, zugeordnete Oberleitungs- und/oder Stromschienenabschnitte mit elektrischer Energie aus einem übergeordneten Stromnetz zu versorgen (zum Beispiel aus einem öffentlichen Stromnetz und/oder einem Bahnstromnetz).

Leistungsspitzen der vorstehend geschilderten Art können aus verschiedenen Gründen unerwünscht sein. Beispielsweise wird ein Energiepreis (insbesondere ein Kilowattstundenpreis) der von den Schienenfahrzeugen bezogenen elektrischen Energie oftmals in Abhängigkeit von einem Auftreten oder nicht-Auftreten von Leistungsspitzen festgelegt. Bei Auftreten von Leistungsspitzen können deutlich höhere Energiepreise fällig werden, als wenn Leistungsspitzen vermieden werden. Für Schienenverkehrsunternehmen kann es wünschenswert sein, die Energiekosten zum Betreiben ihrer Schienenfahrzeuge soweit wie möglich zu begrenzen.

Auch aus infrastruktureller Sicht kann es wünschenswert sein, Leistungsspitzen soweit wie möglich zu vermeiden. So ist es beispielsweise bekannt, dass das Stromversorgungsnetz an Bahnhöfen oder in viel befahrenen und/oder sich durch einen hohen Energiebedarf auszeichnenden Streckenabschnitten (zum Beispiel bei hohen Steigungen) ggf. für etwaige, aber nur sehr selten auftretende Leistungsspitzen gesondert ausgelegt werden muss. Dies geht mit einer Erhöhung von Komplexität und Kosten einher.

Beispielsweise kann es erforderlich sein, gesonderte Unterwerke nur für den selten auftretenden Fall von Leistungsspitzen vorzusehen und dann auch nur entsprechend selten bzw. selektiv zu aktivieren. Die Erfinder haben erkannt, dass dann, wenn Leistungsspitzen nachhaltig vermieden werden, dieses Erfordernis entfallen oder zumindest begrenzt werden kann.

Weiter kann sich der Betrieb eines Stromversorgungsnetzes bei Leistungsspitzen durch eine reduzierte Effizienz auszeichnen (zum Beispiel wenn zusätzliche verlustbehaftete Unterwerke zugeschaltet werden müssen).

EP 1 354 752 A1 beschreibt ein Verfahren zur Regelung der von einem Schienenfahrzeugmotor angeforderten Leistung, wobei die Fahrleitungsspannung und der Oberleitungsstrom am Motor gemessen werden, eine Leerlaufspannung einer Unterstation, die Leistung in die Oberleitung einspeist, ausgewertet wird und die maximale Leistung berechnet wird, die der Oberleitung zur Verfügung steht. Die von dem Motor angeforderte Leistung wird auf gleich oder weniger als die berechnete maximale Leistung begrenzt.

J. Scholten, M. Steiner, "Energiespeicher auf Gleichstrom-Schienenfahrzeugen", ebelektrische Bahnen, DIV-Deutscher Industrieverlag, Band 101, Heft 12, ISSN 0013-5437, Seiten 533 - 538, beschreibt einen Energiespeicher in einem DC-Schienenfahrzeug, der eine Energieeinsparung bei gleichzeitig reduzierter Leistungsaufnahme erlaubt. Der Energiespeicher nimmt während eines Bremsvorganges des Schienenfahrzeugs gewonnene Bremsenergie auf und gibt sie beim nächsten Anfahrvorgang als Nutzenergie wieder ab.

H. al-Ezee et al., "Aspects of catenary free operation of DC traction systems", 2015, 50. International Universities Power Engineering Conference (UPEC), IEEE, Seiten 1 - 5, beschreibt die Speicherung von Energie an Bord von Schienenfahrzeugen, die ohne Energie aus einer Oberleitung betrieben werden.

DE 10 2016 224 125 A1 offenbart ein Verfahren zur Steuerung der Nebenverbraucher eines Schienenfahrzeugs. Die zur Verfügung stehende Leistung des Triebfahrzeuges wird so zwischen Traktionsleistung und Leistungsbedarf des Wagenzuges aufgeteilt, dass trotz begrenzter Gesamtleistung Leistungsspitzen der Traktionsleistung abgedeckt werden können, indem die Leistungsaufnahme des Wagenzuges durch Eingriffe in die Steuerung von Triebfahrzeug und Wagenzug zeitweise reduziert wird und die Verbraucher des Wagenzuges hierzu automatisch ab- bzw. zugeschaltet oder deren Leistungsaufnahme gezielt gesteuert werden.

Eine Aufgabe der vorliegenden Erfindung ist es daher, den Betrieb von Schienenfahrzeugen im Hinblick auf unerwünschte Leistungsspitzen einer Stromversorgung zu verbessern.

Diese Aufgabe wird durch ein Schienenfahrzeug und durch ein Verfahren gemäß den beigefügten unabhängigen Ansprüchen gelöst. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich.

Erfindungsgemäß wurde erkannt, dass das Auftreten von Leistungsspitzen zum Vermeiden der vorstehenden Nachteile soweit wie möglich begrenzt werden sollte. Hierfür wird gemäßder Erfindung vorgeschlagen, Schienenfahrzeuge mit einem elektrischen Energiespeicher auszurüsten. Falls eine Gefahr des Auftretens unerwünschter Leistungsspitzen besteht, kann eine Energieversorgung des Schienenfahrzeugs zumindest temporär auch aus diesem elektrischen Energiespeicher erfolgen. Die Leistungsaufnahme des Schienenfahrzeugs aus der Stromversorgung kann dann entsprechend begrenzt werden, sodass diese entlastet und ein Risiko für das Auftreten von Leistungsspitzen reduziert wird. Zusätzlich kann die elektrische Leistungsentnahme durch zumindest temporäres Reduzieren der Traktionsleistung des Schienenfahrzeugs verringert werden.

Ebenso kann gemäß einem nicht beanspruchten Aspekt vorgesehen sein, für eine Schienenfahrzeugflotte mit mehreren Schienenfahrzeugen die jeweilige Energieentnahme und vor allem Leistungsaufnahme durch ein Schienenfahrzeug aus einer Stromversorgung zwecks Vermeiden von Leistungsspitzen zu koordinieren, zum Beispiel mittels einer übergeordneten Flottensteuereinrichtung (oder, mit anderen Worten, Flottensteuerungseinrichtung). Optional kann dann auch vorgesehen sein, dass zumindest eines der Schienenfahrzeuge zum Vermeiden von Leistungsspitzen und in Anbetracht eines kumulierten Flotten-Energiebedarfs selektiv einem internen Energiespeicher Energie entnimmt (d. h. zumindest anteilig auf eine Energieversorgung aus diesem Energiespeicher anstelle der externen Stromversorgung wechselt).

Durch das Vermeiden der Leistungsspitzen können die Energiekosten gesenkt, kann die Effizienz gesteigert werden und können zumindest mittelfristig auch Anforderungen an die Infrastruktur reduziert werden (zum Beispiel durch Ermöglichen eines leistungsärmeren Auslegens oder auch Weglassens von primär für Leistungsspitzen vorgesehenen zusätzlichen Unterwerken).

Insbesondere wird ein Schienenfahrzeug vorgeschlagen mit den Merkmalen von Anspruch 1 vorgeschlagen und das u. a. dazu eingerichtet ist, elektrische Energie von einer fahrzeugexternen Stromversorgung (die z.B. eine Oberleitung oder Stromschiene aufweist) aufzunehmen und das wenigstens einen elektrischen Energiespeicher aufweist, wobei das Schienenfahrzeug in einem ersten Betriebsmodus mittels von der Stromversorgung aufgenommener Energie (sowie ohne Energie aus dem Energiespeicher) fortbewegt zu werden und in einem zweiten Betriebsmodus zumindest teilweise (oder auch größtenteils oder vollständig) mittels Energie aus dem Energiespeicher, fortbewegt zu werden, wobei das Schienenfahrzeug eine Steuereinrichtung umfasst, die dazu eingerichtet ist, in Abhängigkeit einer Aufnahmeobergrenze, die eine zulässige Obergrenze der Energieaufnahme und genauer gesagt der Leistungsaufnahme aus der Stromversorgung, den ersten oder den zweiten Betriebsmodus zu aktivieren.

Im zweiten Betriebsmodus kann nach wie vor elektrische Energie bzw. Leistung von der fahrzeugexternen Stromversorgung entnommen werden.

Die Aufnahmeobergrenze kann insbesondere zum Vermeiden von Leistungsspitzen innerhalb der Stromversorgung gewählt sein und/oder zum gezielten Drosseln der aus der Stromversorgung aufgenommenen Leistung. Sie kann eine Grenze für eine aus der Stromversorgung aufnehmbare Leistung definieren.

Bei dem Schienenfahrzeug kann es sich um eine Lokomotive, einen Triebwagen oder einen Verbund aus mehreren Einzelfahrzeugen handeln, wobei bevorzugt wenigstens eines dieser Einzelfahrzeuge ein Traktionssystem zur Fortbewegung des Schienenfahrzeugs umfasst.

Unter einer Fortbewegung eines Schienenfahrzeugs kann verstanden werden, dass das Schienenfahrzeug elektrische Energie in eine Traktionsenergie umwandelt, beispielsweise um mit einer gewünschten Geschwindigkeit in eine bestimmte Richtung zu fahren. Die Umwandlung kann durch ein Antriebssystem oder auch Traktionssystem der hierin geschilderten Art erfolgen, zum Beispiel dadurch, dass die elektrische Energie zum Antreiben von wenigstens einem Traktionsmotor des Schienenfahrzeugs verwendet wird.

Der elektrische Energiespeicher kann wenigstens eine Batterie, wenigstens einen Akkumulator und/oder wenigstens einen (Super-) Kondensator umfassen. Der Energiespeicher wird daher als elektrisch bezeichnet, da er zumindest mittelbar elektrische Energie speichern kann (d.h. auch andere Energieformen, die in elektrische Energie umwandelbar sind). Es muss sich aber nicht zwangsläufig um eine elektrische Einrichtung (z.B. mit elektrischen Speicherbauteilen) handeln. Beispielsweise kann der Energiespeicher auch mechanische Energie speichern (z.B. bei einer Konfiguration als Schwungrad), die dann zwecks Abgabe an Verbraucher wieder in elektrische Energie umwandelbar ist.

Die im Energiespeicher speicherbare Energiemenge kann derart bemessen sein, dass eine Fortbewegung des Schienenfahrzeugs zumindest teilweise oder vollständig mit dieser Energie erzielbar ist. Diese Fortbewegung kann zum Beispiel über eine Distanz von mehr als 1 km oder auch mehr als 10 km erfolgen und/oder mit einer vorbestimmten Mindestgeschwindigkeit von zum Beispiel wenigstens 30 km/h.

Allgemein kann vorgesehen sein, dass in dem elektrischen Energiespeicher aus der Stromversorgung aufgenommene elektrische Energie speicherbar ist und/oder das darin Energie speicherbar ist, die zum Beispiel während eines regenerativen Bremsbetriebs gewonnen wird. In letzterem Fall können die Traktionsmotoren in an sich bekannter Weise in einem Generatormodus betrieben werden und kann die dabei gewonnene elektrische Energie in dem Energiespeicher gespeichert werden.

Um entweder den ersten oder den zweiten Betriebsmodus zu aktivieren, kann die Steuereinrichtung geeignete Schalteinrichtungen oder Stromrichteranordnungen geeignet ansteuern. Beispielsweise kann im ersten Betriebsmodus der elektrische Energiespeicher per Schalteinrichtung oder per deaktiviertem Stromrichter oder Ladegerät elektrisch von dem wenigstens einen Traktionsmotor getrennt werden. Stattdessen kann eine elektrische Verbindung zwischen einem Stromabnehmer und insbesondere Haupttransformator des Schienenfahrzeugs und einem den wenigstens einen Traktionsmotor versorgenden Stromrichter geschlossen werden und/oder dieser Stromrichter kann für eine entsprechende Stromversorgung des Traktionsmotors aktiviert werden.

Im zweiten Betriebsmodus kann die Stromversorgung in umgekehrter Weise zwischen Stromabnehmer und Traktionsmotor(en) optional unterbrochen werden. In jedem Fall kann aber die elektrische Verbindung zwischen dem elektrischen Energiespeicher und dem oder den Traktionsmotor(en) geschlossen werden, um zumindest teilweise auf Energie aus diesem Energiespeicher zurückzugreifen.

Zusätzlich kann im Vergleich zum ersten Betriebsmodus eine reduzierte Traktionsleistung erzeugbar sein, d.h. die verfügbare Traktionsleistung wird begrenzt. Prinzipiell kann dann auch weiter elektrische Energie von der externen Stromversorgung bezogen werden, die aufgrund des Betriebs des Schienenfahrzeugs mit reduzierter Leistung aber entlastet wird. Vorteilhafterweise kann auch vorgesehen sein, dass auch mit reduzierter Leistung im zweiten Betriebsmodus zumindest teilweise auf den optionalen Energiespeicher zurückgegriffen wird. Dann wird die Stromversorgung besonders stark entlastet, andererseits der Energiespeicher aber nicht übermäßig belastet.

Die Aufnahmeobergrenze kann derart gewählt sein, dass die Gefahr des Auftretens unerwünschter Leistungsspitzen verringert wird. Allgemein kann die Aufnahmeobergrenze variabel festlegbar sein. Beispiele für Möglichkeiten zur Festlegung werden nachstehend näher erläutert.

Maßnahmen zum Sicherstellen, dass eine Energieaufnahme und insbesondere Leistungsaufnahme ohne Überschreiten der Aufnahmeobergrenze erfolgt, sind nicht zwingend. Stattdessen kann auch nur ein Abgleich zwischen der Energieaufnahme bzw. einem Energiebedarf und der Aufnahmeobergrenze stattfinden. Bei Überschreiten der Aufnahmeobergrenze kann dann zum zweiten Betriebsmodus gewechselt werden.

Soll eine Energieaufnahme und insbesondere Leistungsaufnahme gemäß (d. h. ohne Überschreiten) der Aufnahmeobergrenze sichergestellt werden, kann dies durch das geeignete Ansteuern einer Stromrichteranordnung erfolgen, die einen Haupttransformator des Schienenfahrzeugs in an sich bekannter Weise mit einem Gleichspannungs-Zwischenkreis verbindet. Zusätzlich oder alternativ kann eine Stromrichteranordnung geeignet angesteuert werden, die den Gleichspannungs-Zwischenkreis mit wenigstens einem Traktionsmotor verbindet.

Das Ansteuern kann in beiden der vorstehend genannten Fälle derart erfolgen, dass eine Leistungsaufnahme aus der fahrzeugexternen Stromversorgung reduziert wird, zum Beispiel durch zumindest teilweises Deaktivieren oder Heruntertakten insbesondere der genannten Stromrichteranordnungen.

Durch Vorgeben einer Aufnahmeobergrenze kann also eine Leistungsaufnahme aus der fahrzeugexternen Stromversorgung zumindest teilweise gedrosselt oder sogar vollständig unterbunden werden. In letzterem Fall ist die Aufnahmeobergrenze entsprechend niedrig zu wählen.

Zusammengefasst kann vorgesehen sein, dass eine vollständige Energieaufnahme aus der Stromversorgung gegenüber einer Energieentnahme aus dem Energiespeicher prinzipiell priorisiert ist. Insbesondere zum Vermeiden von Leistungsspitzen kann aber eine Energieentnahme aus dem Energiespeicher zumindest selektiv zugeschaltet werden. Sollte also der Energiebedarf des Schienenfahrzeugs und insbesondere dessen Leistungsbedarf dazu führen, dass die Stromversorgung gegebenenfalls überlastet wird bzw. darin Leistungsspitzen auftreten können, kann diese Stromversorgung durch eine Energieentnahme aus dem Energiespeicher, der dann sozusagen als alternative Energiequelle dient, zumindest teilweise entlastet werden.

Es versteht sich, dass eine Energieentnahme aus dem Energiespeicher gleichbedeutend ist mit einer zumindest teilweisen Deckung des Leistungsbedarfs des Schienenfahrzeugs durch den oder aus dem Energiespeicher. Eine Leistungsaufnahme aus der Stromversorgung durch das Schienenfahrzeug kann bei der Entnahme aus dem Energiespeicher dann entsprechend reduziert werden.

Eine Weiterbildung sieht vor, dass die Steuereinrichtung dazu eingerichtet ist, in Abhängigkeit einer Energiebedarfsgröße (die auch als Leistungsbedarfsgröße bezeichnet werden kann bzw. einen solchen Leistungsbedarf angibt) des Schienenfahrzeugs den ersten oder den zweiten Betriebsmodus zu aktivieren. Die Energiebedarfsgröße kann auch als Leistungsbedarf des Schienenfahrzeugs bezeichnet werden. Es kann sich um einen aktuell gemessenen Leistungs- bzw. Energiebedarf handeln (oder, mit anderen Worten, einen aktuellen Energieverbrauch oder Leistungsbezug), um einen zum Beispiel anhand einer angeforderten Zugkraft oder einer angeforderten Geschwindigkeit geschätzten oder ermittelten Energiebedarf oder um einen zukünftig erwarteten Energiebedarf, der zum Beispiel anhand von vorausliegenden Fahrstreckenprofilen ermittelbar ist.

Gemäß einem Beispiel kann die Leistungsbedarfsgröße auf Basis einer angeforderten Fortbewegung des Schienenfahrzeugs ermittelt werden. Folglich kann sich die Leistungsbedarfsgröße insbesondere aus einer benötigten Traktionsenergie und insbesondere Traktionsleistung zusammensetzen, welche zum Erzielen einer gewünschten Fortbewegung (zum Beispiel einer gewünschten Geschwindigkeit und/oder Zugkraft) benötigt wird. Diese Anforderungen kann z. B. durch einen Fahrzeugführer manuell vorgegeben werden oder aber durch ein Zugbeeinflussungssystem (zum Beispiel ein System nach ATO-over-ETCS-Standard, Automatic Train Operation gesichert durch European Train Control System).

Zusätzlich oder alternativ kann die Leistungsbedarfsgröße auf Basis eines gemessenen Leistungsbezugs und/oder gemessenen Energiebedarfs ermittelt werden. Beispielsweise kann zumindest im ersten Betriebsmodus gemessen werden, welche elektrische Energiemenge bzw. Leistung aktuell aus der Stromversorgung entnommen wird. Diese Leistung kann dann zum Ermitteln der Leistungsbedarfsgröße verwendet bzw. dieser gleichgesetzt werden, da sie dem aktuellen Leistungsbedarf entspricht.

Die Steuereinrichtung kann dazu eingerichtet sein, die Leistungsbedarfsgröße zu ermitteln, beispielsweise gemäß einer der vorstehend genannten Varianten (beispielsweise basierend auf Traktionsanforderung oder Messung). Wie erwähnt, kann dies zum Beispiel nach Maßgabe einer Zugkraft- oder Geschwindigkeitsanforderung und/oder in Kenntnis von Schienenfahrzeugparametern (wie dem Gewicht) und/oder in Kenntnis von Streckenparametern (wie einer Streckensteigung) erfolgen. Alternativ kann die Leistungsbedarfsgröße auch von einer anderweitigen Einrichtung ermittelt und an die Steuereinrichtung übertragen werden.

Gemäß einer Variante können Schwellenwerte oder Regeln festgelegt sein, die bestimmen, bei welchen Werten der Energiebedarfsgröße der erste oder der zweite Betriebsmodus aktiviert bzw. zwischen diesen Modi gewechselt werden soll.

Zusätzlich oder alternativ sieht eine weitere Ausführungsform vor, dass der zweite Betriebsmodus spätestens dann aktivierbar ist, wenn die Leistungsbedarfsgröße größer als die Aufnahmeobergrenze ist. Ist diese Bedingung erfüllt, kann ein aktueller, angeforderter oder zukünftig erwarteter Leistungsbedarf des Schienenfahrzeugs nicht mehr durch die zum Vermeiden von Leistungsspitzen begrenzte oder, mit anderen Worten, gedeckelte Leistungsaufnahme aus der fahrzeugexternen Stromversorgung gedeckt werden. Stattdessen erfolgt dann eine zusätzliche oder optional auch vollständige Energieversorgung durch den Energiespeicher. Hierdurch ist gewährleistet, dass trotz begrenzter Energieaufnahme von extern eine gewünschte Fahrleistung des Schienenfahrzeugs nach wie vor erreicht werden kann.

Alternativ oder zusätzlich kann der zweite Betriebsmodus spätestens dann aktivierbar sein, wenn die Aufnahmeobergrenze einen vorbestimmten Schwellenwert erreicht und/oder unter diesem liegt. In diesem Fall kann die Möglichkeit zur Energieaufnahme aus der Stromversorgung zum Beispiel als derart begrenzt angesehen werden, dass sozusagen prophylaktisch die Energieaufnahme aus dem Energiespeicher ermöglicht wird. Dies kann beispielsweise dann der Fall sein, wenn die Aufnahmeobergrenze die Leistungsaufnahme auf einen sehr niedrigen Wert von zum Beispiel weniger als 10% der von dem Schienenfahrzeug maximal möglichen aufnehmbaren Leistung begrenzt.

Ferner zusätzlich oder alternativ besteht auch die Möglichkeit, den zweiten Betriebsmodus dann zuzuschalten, wenn ein Ladeniveau des Energiespeichers einen vorbestimmten Schwellenwert erreicht oder überschreitet. Dies kann zum Beispiel dann relevant sein, wenn sichergestellt werden soll, dass in einem etwaigen zukünftigen regenerativen Bremsbetrieb erzeugte elektrische Energie möglichst umfassend speicherbar ist und zum Beispiel nicht dissipiert werden muss. Die Möglichkeit zum Erzeugen elektrischer Energie in einem regenerativen Bremsbetrieb ist vorzugsweise dann vorgesehen, wenn die Stromversorgung aufnahmefähig bzw. rückspeisefähig ist, zum Beispiel um vom Energiespeicher ggf. nicht mehr aufnehmbare Energiemengen aufnehmen zu können.

Gemäß einer Weiterbildung ist die Aufnahmeobergrenze basierend auf wenigstens einem der folgenden festlegbar:
- einer Fahrervorgabe;
- einer Vorgabe einer fahrzeugexternen Steuereinrichtung;
- einer Vorgabe einer fahrzeuginternen Steuereinrichtung.

Die Fahrervorgabe kann zum Beispiel durch Betätigen einer geeigneten Eingabeeinrichtung in einem Führerstand des Schienenfahrzeugs erfolgen.

Die fahrzeugexterne Steuereinrichtung kann von einem Zugbeeinflussungssystem umfasst sein und/oder ein solches bereitstellen. In an sich bekannter Weise können Zugbeeinflussungssysteme als eine primäre Funktion Geschwindigkeitsvorgaben an ein Schienenfahrzeug übermitteln, zum Beispiel um das Einhalten gewünschter Geschwindigkeitsprofile sicherzustellen. Ein Beispiel sind Zugbeeinflussungssysteme nach dem oben genannten ECTS-Standard.

Die fahrzeuginterne Steuereinrichtung kann z. B. von einem vorstehend geschilderten ATO-over-ECTS-System umfasst sein.

Prinzipiell ist es aber auch denkbar, eine von herkömmlichen Zugbeeinflussungssystemen verschiedene und insbesondere separat hiervon vorgesehene Steuereinrichtung zur Vorgabe der Aufnahmeobergrenze vorzusehen. Ein Beispiel einer derartigen separaten Steuereinrichtung ist eine nachstehend erläuterte Flottensteuereinrichtung, die den Betrieb einer Mehrzahl von Schienenfahrzeugen koordiniert, insbesondere hinsichtlich deren aus einer gemeinsamen Stromversorgung aufgenommenen elektrischen Leistung.

Gemäß einem weiteren Aspekt wird die Aufnahmeobergrenze basierend auf einer Messgröße ermittelt, die eine Eigenschaft der fahrzeugexternen Stromversorgung betrifft (oder, anders ausgedrückt, diese Eigenschaft beschreibt und/oder quantifiziert). Insbesondere kann die Messgröße eine Spannungsgröße der Stromversorgung sein (zum Beispiel die Amplitude und/oder Frequenz der dortigen Wechselspannung). Bevorzugt kann dann, wenn die Spannungsgröße und/oder die darauf basierend festgelegte Aufnahmeobergrenze kleiner als ein zulässiger Schwellenwert ist, der zweite Betriebsmodus aktiviert werden. Das Unterschreiten des Schwellenwerts ist ein Beispiel für ein Aktivierungskriterium, das von der Spannungsgröße zum Aktiveren des zweiten Betriebsmodus zu erfüllen ist.

Ebenso kann die Messgröße eine Phasenverschiebungsgröße der Stromversorgung sein. Beispielsweise kann sie einen Phasenversatz zwischen dem Strom und der Spannung in der Stromversorgung angeben und/oder eine Relativverschiebung dieser Größen in Bezug auf einen Soll-Phasenversatz. Der Phasenversatz kann von dem Schienenfahrzeug anhand der aufgenommenen Leistung bzw. Energie bestimmt werden. Bevorzugt kann dann, wenn die Phasenverschiebungsgröße größer als und/oder die darauf basierend festgelegte Aufnahmeobergrenze kleiner als ein zulässiger Schwellenwert ist, der zweite Betriebsmodus aktiviert werden. Das Überschreiten bzw. Unterschreiten des Schwellenwerts ist ein Beispiel für ein Aktivierungskriterium, das von der Phasenverschiebungsgröße zum Aktiveren des zweiten Betriebsmodus zu erfüllen ist.

Allgemein kann vorgesehen sein, dass desto niedriger die Messgröße und vorzugsweise gemessene Spannungsgröße ist, desto niedriger kann auch die Aufnahmeobergrenze gewählt sein. Im Fall der Phasenverschiebungsgröße kann die Aufnahmeobergrenze hingegen mit zunehmender Phasenverschiebungsgröße abnehmen.

Durch Berücksichtigen einer Messgröße kann mit einer höheren Genauigkeit darauf geschlossen werden, ob die Gefahr des Auftretens unerwünschter Leistungsspitzen tatsächlich besteht. Insbesondere kann die Messgröße Auskunft über eine tatsächliche Belastung der Stromversorgung geben. Die bevorzugt gemessene Spannungsgröße kann auf eine solche Belastung besonders zuverlässige Rückschlüsse ermöglichen.

Beispielsweise kann ein Abfall der Spannungsgröße unter den zulässigen Schwellenwert anzeigen, dass eine Belastung bzw. die aus der Stromversorgung bezogene Leistung bereits vergleichsweise hoch ist. Insbesondere kann der zulässige Schwellenwert derart gewählt sein, dass dessen Erreichen oder Unterschreiten darauf hindeutet, dass eine unerwünschten Leistungsspitze mit einer hohen Wahrscheinlichkeit auftreten kann oder gegebenenfalls bereits vorliegt.

Insgesamt wird durch die vorangehenden Aspekte also die Möglichkeit geschaffen, besonders bedarfsgerecht die Energieentnahme und vor allem Leistungsaufnahme aus der Stromversorgung zu begrenzen und gegebenenfalls zwischen dem ersten und zweiten Betriebsmodus zu wechseln. Auf diese Weise können unerwünschte Spannungsspitzen innerhalb der Stromversorgung mit einer erhöhten Zuverlässigkeit vermieden werden.

Alternativ oder zusätzlich kann eine Momentanleistung der Stromversorgung ermittelt und kann vorzugsweise dann, wenn die Momentanleistung grösser als ein zulässiger Schwellenwert ist, der zweite Betriebsmodus aktiviert werden. Insbesondere kann die Aufnahmeobergrenze in Abhängigkeit der Momentanleistung bestimmt werden, wobei die Momentanleistung dann ein Beispiel einer Messgröße der hierin offenbarten Art sein kann. Die Momentanleistung kann von dem Schienenfahrzeug anhand der oder als die entnommene Leistung bestimmt werden. Sie kann auch z.B. von einem Unterwerk oder einer anderweitigen Komponente der Stromversorgung ermittelt und an eine Flottensteuereinrichtung und/oder an das Schienenfahrzeug übermittelt werden.

Die Erfindung betrifft auch ein Verfahren zum Betreiben eines Schienenfahrzeugs mit den Merkmalen von Anspruch 9 und u.a. wobei das Schienenfahrzeug dazu eingerichtet ist, elektrische Energie von einer fahrzeugexternen Stromversorgung aufzunehmen und wenigstens einen elektrischen Energiespeicher aufweist wobei das Verfahren umfasst:
- Aktivieren eines ersten oder eines zweiten Betriebsmodus in Abhängigkeit einer Aufnahmeobergrenze, die eine zulässige Obergrenze der Leistungsaufnahme (oder allgemeiner der Energieaufnahme (d. h. der aufnehmbaren Energiemenge und/oder aufnehmbaren Leistung)) aus der Stromversorgung definiert; wobei das Schienenfahrzeug in dem ersten Betriebsmodus mittels aus der fahrzeugexternen Stromversorgung aufgenommener Energie und ohne Energie aus dem Energiespeicher fortbewegt wird und in dem zweiten Betriebsmodus, zumindest teilweise mittels Energie aus dem Energiespeicher fortbewegt wird.

Das Verfahren kann jegliche Weiterbildung, jegliches weitere Merkmal und jeglichen weiteren Schritt umfassen, um sämtliche der vorstehenden und nachstehenden Betriebszustände, Wechselwirkungen und Funktionen bereitzustellen oder auszuführen. Insbesondere kann das Verfahren mit einer Anordnung gemäß jeglichem der vorstehenden oder nachstehenden Aspekte ausführbar sein. Allgemein können sämtliche Weiterbildungen von und Ausführungen zu den Schienenfahrzeug-Merkmalen auch auf die gleichlautenden Verfahrensmerkmale zutreffen bzw. bei diesen vorgesehen sein. Beispielsweise kann das Verfahren auch den Schritt des Erhaltens und insbesondere Ermittelns der Aufnahmeobergrenze zum Beispiel gemäß einer der vorangehenden Varianten umfassen. Ferner kann das Verfahren Schritte zum elektrischen Verbinden oder Trennen von Traktionsmotoren mit/von weiteren Komponenten des Schienenfahrzeugs umfassen (zum Beispiel mit/von einem Stromrichter und/oder Transformator), um in der vorstehend geschilderten Weise zwischen einem ersten und zweiten Betriebsmodus zu wechseln.

Im Folgenden werden Ausführungsformen der Erfindung anhand der beigefügten schematischen Figuren erläutert. In Ihrer Art und/oder Funktion übereinstimmende Merkmale können dabei figurenübergreifend mit den gleichen Bezugszeichen versehen sein.
- Fig. 1: zeigt eine schematische Ansicht einer Schienenverkehrsstrecke mit einem Schienenfahrzeug gemäß einem ersten Ausführungsbeispiel der Erfindung;
- Fig. 2: zeigt ein Diagramm zum Erläutern von unerwünschten Leistungsspitzen in einer Stromversorgung, wie sie zum Beispiel beim Betrieb des Schienenfahrzeugs aus Figur 1 auftreten können;
- Fig. 3: zeigt eine schematische Darstellung eines Antriebssystems des Schienenfahrzeugs aus Figur 1;
- Fig. 4: zeigt ein Ablaufschema eines Verfahrens gemäß einem ersten Ausführungsbeispiel, wie es mit dem Schienenfahrzeug aus Figur 1 ausführbar ist;
- Fig. 5: zeigt eine schematische Ansicht einer Anordnung, welche nicht Teil der Erfindung ist,der eine Schienenfahrzeugflotte vorgesehen ist.

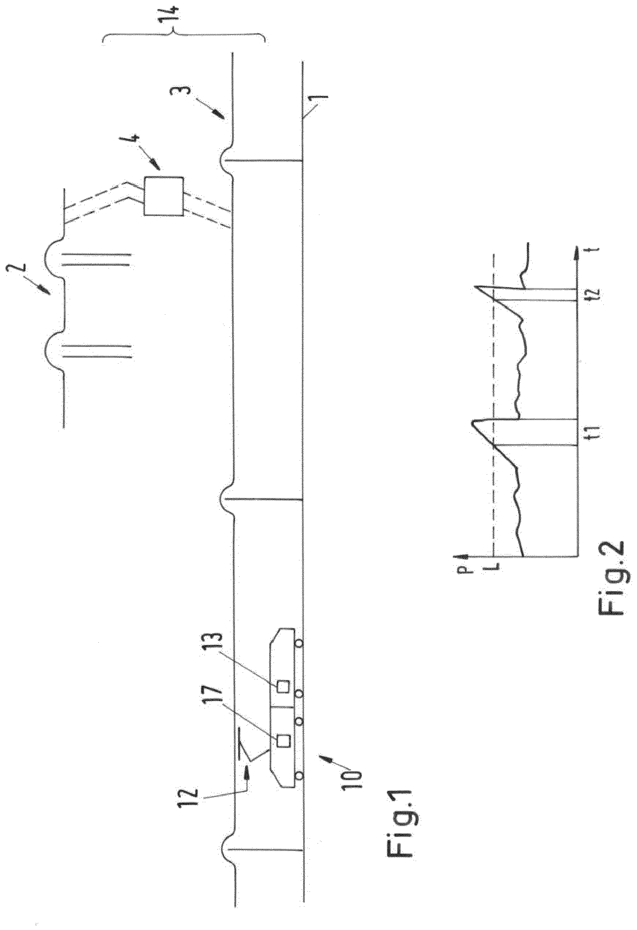

In Figur 1 ist ein Abschnitt einer Schienenverkehrsstrecke 1 samt elektrischer Infrastruktur gezeigt, innerhalb derer ein Schienenfahrzeug 10 gemäß einem ersten Ausführungsbeispiel der Erfindung betrieben wird. Das Schienenfahrzeug 10 ist beispielhaft ein mehrteiliger Zug mit zwei Triebwägen, zwischen denen optional auch noch mehrere Waggons angeordnet sein könnten.

Als übliche Komponente der Infrastruktur erkennt man ein öffentliches Stromnetz 2, zum Beispiel in Form eines Bahnstromnetzes. Entlang der Schienenverkehrsstrecke 1 befindet sich eine Oberleitung 3, von der das Schienenfahrzeug 10 mittels eines Stromabnehmers 12 elektrische Energie aufnehmen kann. Zwischen der Oberleitung 3 und dem öffentlichen Stromnetz 2 befindet sich ein Umspannwerk in Form eines sogenannten Unterwerks 4. Entlang der gesamten Schienenverkehrsstrecke 1, von der in Figur 1 nur ein Ausschnitt gezeigt ist, können mehrere derartige Unterwerke 4 vorgesehen sein, zum Beispiel alle 10 km oder alle 20 km wenigstens ein Unterwerk 4.

Es können auch mehrere Unterwerke 4 für einen einzelnen Streckenabschnitt vorgesehen sein, beispielsweise wenn es sich um Streckenabschnitte mit einem hohen Energiebedarf und/oder Leistungsbedarf handelt. Dies kann zum Beispiel an Bahnhöfen mit einer potentiellen Mehrzahl von gleichzeitig anfahrenden Schienenfahrzeugen 10 der Fall sein oder bei Streckenabschnitten mit einer starken Steigung.

Im vorliegenden Fall bildet die Oberleitung 3 vorzugsweise samt Unterwerk 4 eine fahrzeugexterne Stromversorgung 14 im Sinne der Ansprüche. Prinzipiell kann von einer erfindungsgemäßen fahrzeugexternen Stromversorgung aber auch das öffentliche Stromnetz 2 umfasst sein.

Mittels der Stromversorgung 14 wird eine elektrische Leistung zum Fortbewegen der Schienenfahrzeuge 10 bereitgestellt. Die bereitgestellte Leistung bzw. Leistungsmenge ist dabei primär eine Funktion der von den Schienenfahrzeugen 10 angeforderten bzw. entnommenen Leistung. Fordert das Schienenfahrzeug 10 oder einer Mehrzahl von Schienenfahrzeugen 10, die gleichzeitig von der Stromversorgung 14 versorgt werden, eine hohe (kumulierte) Leistung an, kann es zu unerwünschten Leistungsspitzen innerhalb der Stromversorgung 14 kommen. Diese können insbesondere das Unterwerk 4 belasten bzw. sich in einer unerwünschten Leistungserhöhung des Unterwerks 4 äußert und entsprechend auch dort messbar ist. Allgemein kann die von einem Unterwerk 4 bereitgestellte Leistung in Abhängigkeit einer verbrauchten bzw. angeforderten Leistung erzeugt werden oder, mit anderen Worten, dieser angeforderten Leistung nacheilen.

In Figur 2 ist eine entsprechende Leistungskurve beispielhaft gezeigt. Genauer gesagt ist dort die bereitgestellte Leistung eines Unterwerks 4, welche sich nach der von dem oder den Schienenfahrzeug(en) 10 angeforderten Leistungen P richtet, über der Zeit t aufgetragen. Strichliert angedeutet ist dabei eine zulässige Leistungsspitzen-Grenze L, die nicht überschritten werden soll. Man erkennt, dass die Leistungsspitzen-Grenze L während der Zeiträume t1 und t2 temporär überschritten wird. Die Zeiträume t1, t2 können dabei nur wenige Minuten oder einige Sekunden umfassen, zum Beispiel weniger als 30 Sekunden.

Die Leistungskurve aus Figur 2 kann auch die von einem Schienenfahrzeug 10 oder einer Flotte von Schienenfahrzeugen 10 entnommene Leistung anzeigen. Die Fläche unter der Leistungskurve entspricht einer der Stromversorgung 14 entnommenen Energie. Wenn das Schienenfahrzeug 10 (oder die Flotte) beispielsweise von einer Haltstelle oder an einer Steigung anfährt, kann die Leistungsspitzen-Grenze L überschritten werden, selbst wenn die Stromversorgung 14 prinzipiell dazu ausgelegt ist, den Energiebedarf des Schienenfahrzeugs 10 (oder der Flotte) zu decken.

Wie einleitend erläutert, ist das Auftreten derartiger Leistungsspitzen mit mehreren Nachteilen verbunden und kann insbesondere in erhöhten Energiekosten für einen Betreiber des Schienenfahrzeugs 10 oder einer Flotte von Schienenfahrzeugen 10 resultieren.

Erfindungsgemäß umfasst das Schienenfahrzeug 10 daher einen elektrischen Energiespeicher 13. Dieser kann zum Beispiel aus der Oberleitung 3 mit elektrischer Energie gespeist werden, beispielsweise wenn das Schienenfahrzeug 10 steht oder nicht sämtliche aus der Oberleitung aufgenommene Energie für eine Fortbewegung benötigt wird. Auch ein Aufladen mit im Rahmen eines regenerativen Bremsbetriebs gewonnener elektrische Energie ist möglich.

Das Schienenfahrzeug 10 umfasst auch eine Steuereinrichtung 17, zum Beispiel ein Steuergerät mit wenigstens einem Mikrocontroller, das Algorithmen und/oder Programmanweisungen abarbeitet, um gewünschte Funktionen bereitzustellen.

Die Steuereinrichtung 17 ist vorliegend dazu eingerichtet, zwischen einem ersten und einem zweiten Betriebsmodus des Schienenfahrzeugs 10 und insbesondere von dessen Antriebssystem 100 zu wechseln. Es ist auch möglich, zusätzlich oder alternativ eine fahrzeugexterne Steuereinrichtung vorzusehen, die insbesondere Bestandteil eines Zugbeeinflussungssystems sein kann. Diese kann sämtliche hierin geschilderten Funktionen der Fahrzeug-Steuereinrichtung 17 übernehmen oder aber diese Steuereinrichtung 17 zum Ausführen der hierin geschilderten Funktionen ansteuern. Bei dieser optionalen fahrzeugexternen Steuereinrichtung kann es sich um eine von der nachstehende erläuterten Flottensteuereinrichtung 50 unabhängige Steuereinrichtung handeln, da sie z.B. nicht zwingend zum Steuern einer Mehrzahl von Schienenfahrzeugen 10 in einem großflächigen Gebiet eingerichtet ist.

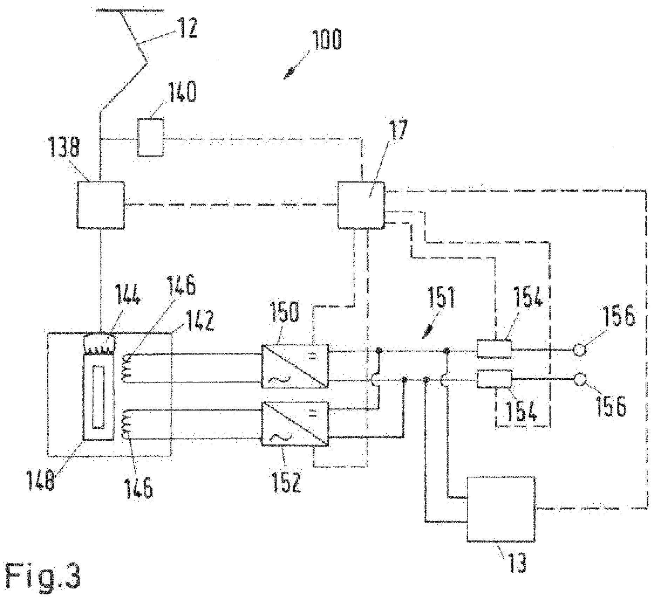

Im Folgenden bezugnehmend auf Figur 3 wird eine mögliche Ausgestaltung eines solchen Antriebssystems 100 beispielhaft erläutert. Die Komponenten dieses Antriebssystem 100 können prinzipiell auf beliebige Einzelfahrzeuge bzw. Triebwägen des Schienenfahrzeugs 10 verteilt, optional aber auch in einem der Triebwägen zusammengefasst sein. Wie strichliert dargestellt, können zahlreiche der gezeigten Komponenten des Antriebsystems 100 mit der Steuereinrichtung 17 verbunden sein, um an diese Signale zu übermitteln und/oder Steuersignale von dieser zu erhalten.

Das Antriebssystem 100 ist elektrisch mit dem ebenfalls gezeigten Stromabnehmer 12 verbunden. Ausgehend von dem Stromabnehmer 12 wird die aufgenommene elektrische Energie über einen herkömmlichen Oberspannungswandler 140 und einen herkömmlichen Hauptschalter 138 zu einem ebenfalls herkömmlichen Haupttransformator 142 geführt. Der Hauptschalter 138 ist in bekannter Weise dazu eingerichtet, durch selektives Öffnen die elektrische Verbindung zwischen dem Stromabnehmer 12 und dem Haupttransformator 142 zu trennen. Der Oberspannungswandler 140 kann eine anliegende Spannung und/oder einen Stromfluss (und somit auch eine aufgenommene Leistung) messen, der primärseitig an dem Haupttransformator 142 anliegt.

Insofern dient der Oberspannungswandler 140 vorliegend auch als Energieaufnahme-Messeinrichtung, der die vom Schienenfahrzeug 10 aus der Stromversorgung 14 aufgenommene Energie und/oder Leistung misst.

Der innere Aufbau des Haupttransformators 142 ist ebenfalls stark vereinfacht dargestellt. Gezeigt sind ein Magnetkern 148 und eine Primärwicklung 144, an der eine Primärspannung anliegt. Ferner gezeigt sind Sekundärwicklungen 146, an denen eine (transformierte) Sekundärspannung anliegt. Bei der Zuordnung der Begriffe primär und sekundär wird von einem Hauptbetriebszustand des Haupttransformators 142 ausgegangen, bei dem über den Stromabnehmer 12 aufgenommene elektrische Energie primärseitig bereitgestellt ist und zur weiteren Verwendung innerhalb des Schienenfahrzeugs 10 in eine sekundärseitige Spannung gewandelt wird.

An jeder der Sekundärwicklungen 146 ist ferner ein Stromrichter angeschlossen, wobei lediglich beispielhaft ein erster Stromrichter 150 und ein weiterer Stromrichter 152 vorgesehen ist. Beide Stromrichter 150, 152, die auch als Netzstromrichter bezeichnet werden können, sind bevorzugt wahlweise als Gleichrichter oder als Wechselrichter betreibbar und mit einem Gleichspannungs-Zwischenkreis 151 verbunden. Mit diesem Gleichspannungs-Zwischenkreis 151 sind auch Traktionsmotoren 156 verbunden, die bevorzugt wahlweise motorisch oder generatorisch betrieben werden können.

Zwischen dem Gleichspannungs-Zwischenkreis 151 und den Traktionsmotoren 156 ist jeweils ein Motorstromrichter 154 geschaltet, der wiederum bevorzugt wahlweise als Gleichrichter (für den generatorischen Betrieb) oder als Wechselrichter (für den motorischen Betrieb) betreibbar ist.

Mit dem Gleichspannungs-Zwischenkreis 151 ist auch der elektrische Energiespeicher 13 verbunden, der in dem gezeigten Fall eine Batterie ist. Nicht gesondert dargestellt ist ein Ladegerät des Energiespeichers 13, mit dem zum Beispiel eine Energieaufnahme oder Energieabgabe dieses Energiespeichers 13 gesteuert werden kann. Der Betrieb des Ladegeräts kann durch die Steuereinrichtung 17 gesteuert werden, wie durch eine entsprechende Signalverbindung angedeutet.

Zur Fortbewegung entlang der Schienenverkehrsstrecke 1 ist das Schienenfahrzeug 10 in einem ersten Betriebsmodus dazu eingerichtet, maßgeblich und bevorzugt ausschließlich elektrische Energie aus Oberleitung 3 aufzunehmen und nicht auf elektrische Energie aus dem Energiespeicher 13 zurückzugreifen. In diesem Fall werden unter Ansteuerung und/oder Aktivierung durch die Steuereinrichtung 17 die Netzstromrichter 150, 152 als Gleichrichter und die Motorstromrichter 154 als Wechselrichter betrieben. Der Haupttransformator 142 ist hingegen typischerweise ein passives Bauteil, das nicht gesondert angesteuert wird.

In einem zweiten Betriebsmodus erfolgt hingegen keine ausschließliche Energieaufnahme aus der Oberleitung 3. Stattdessen wird das Schienenfahrzeug 10 dann zumindest teilweise oder auch vollständig auf Basis von elektrischer Energie aus dem Energiespeicher 13 betrieben. Zusätzlich oder alternativ kann die erzeugbare Traktionsleistung (und somit der Energie- und insbesondere Leistungsbedarf) des Schienenfahrzeugs 10 gedrosselt werden.

Soll der elektrische Energiespeicher 13 im zweiten Betriebsmodus lediglich zugeschaltet und nach wie vor Energie aus Oberleitung 3 aufgenommen werden, kann die Steuereinrichtung 17 den Energiespeicher 13 bzw. dessen Ladegerät für eine Energieabgabe in der gewünschten Höhe ansteuern. Soll hingegen eine Fortbewegung ausschließlich mittels Energie aus dem Energiespeicher 13 erfolgen, kann die Steuereinrichtung 17 in analoger Weise den Energiespeicher oder dessen Ladegerät ansteuern, gleichzeitig aber auch die Netzstromrichter 150, 152 deaktivieren oder, mit anderen Worten, sperren. In diesem Zustand kann keine Energie mehr aus der Oberleitung 3 in den Gleichspannung-Zwischenkreis 151 eingespeist werden. Um zu entscheiden, ob der erste oder der zweite Betriebsmodus aktiviert werden soll, überwacht die Steuereinrichtung 17, ob eine aktuelle, angeforderte oder zukünftige Energieaufnahme und bevorzugt eine Leistungsaufnahme eine Aufnahmeobergrenze überschreitet, welche die zulässige Obergrenze der Leistungsaufnahme aus der Stromversorgung 14 definiert. Die Steuereinrichtung 17 ist vorliegend dazu eingerichtet, diese Aufnahmeobergrenze auch selbst zu definieren bzw. festzulegen. Prinzipiell kommen für eine solche Festlegung sämtliche der vorstehend allgemein erläuterten Varianten in Betracht. Insbesondere kann eine entsprechend Vorgabe durch einen Fahrer oder eine fahrzeugexterne Steuereinrichtung erfolgen.

Im gezeigten Fall ist zusätzlich oder alternativ vorgesehen, zum Festlegen der Aufnahmeobergrenze die an dem Stromabnehmer 12 anliegende Spannung der Oberleitung 3 hinsichtlich Amplitude zu messen. Dies erfolgt mittels des Oberspannungswandlers 140, dessen Messsignale über die strichliert angedeutete Verbindung an die Steuereinrichtung 17 übermittelt werden.

Fällt die Amplitude der Spannung in der Oberleitung 3 unter einen vorbestimmten Schwellenwert, deutet dies auf eine hohe Belastung der Stromversorgung 14 hin, zum Beispiel da eine Mehrzahl anderer Schienenfahrzeuge 10 hiervon ebenfalls mit Energie gespeist werden. In diesem Fall kann die Steuereinrichtung 17 zum Vermeiden unerwünschter Leistungsspitzen die Aufnahmeobergrenze (des eigenen Schienenfahrzeugs 10) auf einen Wert setzen, der unterhalb einer maximal möglichen Leistungsaufnahme durch das Schienenfahrzeug liegt, d. h. der keine unbegrenzte Leistungsaufnahme aus der Stromversorgung mehr ermöglicht. Beispielsweise kann die Aufnahmeobergrenze auf einen Wert von weniger als 100 % gesetzt werden, d. h. die Leistungsaufnahme wird dann zu einem gewissen Prozentsatz beschränkt.

In der Folge überwacht die Steuereinrichtung 17, ob die Obergrenze von der zum Beispiel angeforderten Leistung und genauer gesagt einer darauf basierend ermittelten Leistungsbedarfsgröße überschritten wird. Wenn dies der Fall ist, wird in den zweiten Betriebsmodus gewechselt. Es kann dann auch weiter überprüft werden, ob Kriterien für ein Rückschalten in den ersten Betriebsmodus vorliegen. Diese können zum Beispiel dann erfüllt sein, wenn die Obergrenze unterschritten wird, das Ladungsniveau des Energiespeichers 13 in nicht akzeptabler Weise absinkt und/oder die Steuereinrichtung 17 einen entsprechenden Rückschalt-Befehl gibt.

Erreicht die in der Oberleitung 3 gemessene Spannung nicht den vorbestimmten Schwellenwert, kann hingegen die Aufnahmeobergrenze auf einen Wert gesetzt werden, der die Obergrenze einer maximal möglichen Leistungsaufnahme gleichsetzt, d. h. der die maximal mögliche Leistungsaufnahme nicht beschränkt. Beispielsweise kann die Aufnahmeobergrenze auf 100 % gesetzt werden oder auch gänzlich entfallen, sodass jeweils keine Beschränkung vorliegt.

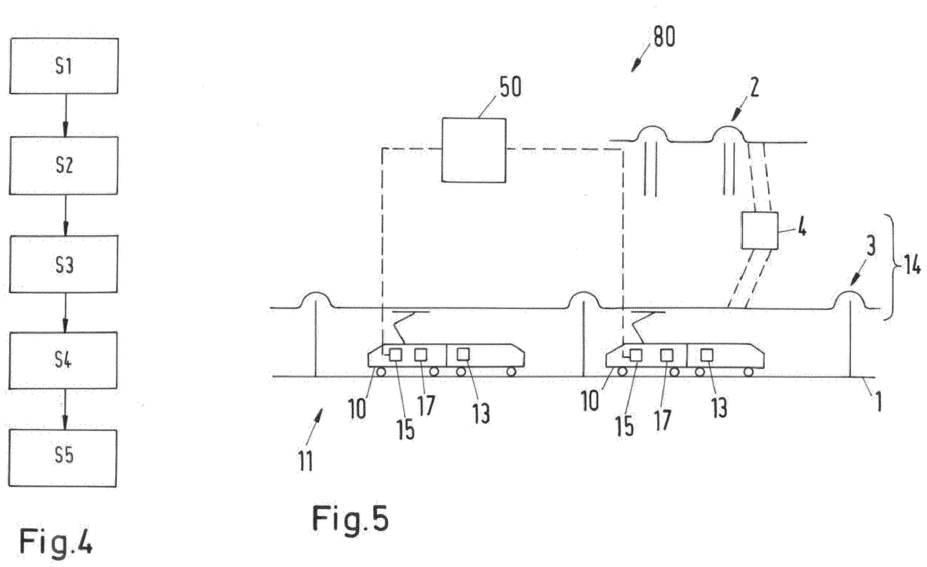

In Figur 4 ist ein Ablaufschema des vorstehend prinzipiell erläuterten Vorgehens bzw. eines Verfahrens gemäß einem Ausführungsbeispiel der Erfindung gezeigt, mittels dem das Schienenfahrzeug 10 betreibbar ist.

In einem Schritt S1 wird das Schienenfahrzeug 10 entlang der Schienenverkehrsstrecke 1 fortbewegt. Der erste Betriebsmodus ist aktiviert, d. h. die Leistungsaufnahme aus der Stromversorgung 14 ist nicht begrenzt, beispielsweise da die Aufnahmeobergrenze einen Wert von 100 % annimmt. Weiter wird die Spannung der Oberleitung 3 gemessen und an die Steuereinrichtung 17 übermittelt.

Als eine Leistungsbedarfsgröße wird die aufgenommene Leistung des Schienenfahrzeugs 10 anhand der vom Oberspannungswandler 140 erfassten Messsignale ermittelt und fortlaufend überwacht. Alternativ oder zusätzlich (zum Beispiel für eine Mittelwertbildung) kann die Leistungsbedarfsgröße auch anhand einer vorliegenden Zugkraftanforderung abgeschätzt bzw. berechnet werden.

In den Schritten S2 und S3 wird eine zulässige Aufnahmeobergrenze bestimmt, um Leistungsspitzen zu vermeiden. Genauer gesagt wird in einem Schritt S2, der parallel zum Schritt S1 und/oder grundsätzlich fortlaufend ausführbar ist, die gemessene Spannung der Oberleitung 3 mit einem vorbestimmten Schwellenwert verglichen. Wird dieser Schwellenwert überschritten, wird ein unerwünschter Belastungszustand der Stromversorgung 14 erkannt, bei dem Leistungsspitzen auftreten können. Es wird dann zum Schritt S3 gewechselt. Wird dieser Schwellenwert nicht überschritten, erfolgt kein solcher Wechsel zum Schritt S3, sondern zum Beispiel eine weitere Überwachung der Oberleitungsspannung.

Im Schritt S3 wird aufgrund des Überschreitens des Schwellenwerts in Schritt S2 die Aufnahmeobergrenze verändert. Genauer gesagt für diese auf einen von 100% verschiedenen Wert und gesetzt genauer gesagt auf einen geringeren Wert reduziert, sodass die Leistungsaufnahme aus der Oberleitung 3 beschränkt wird. Zu den Schritten S2 und S3 alternative oder auch zusätzliche Möglichkeiten zum Festlegen der Aufnahmeobergrenze wurden vorstehend erläutert.

In einem Schritt S4, der parallel zu zumindest Schritt S3 und/oder grundsätzlich fortlaufend ausführbar ist, wird die Leistungsbedarfsgröße (zum Beispiel die angeforderte Leistung) des Schienenfahrzeugs 10 mit der Aufnahmeobergrenze verglichen. Liegt die Leistungsbedarfsgröße oberhalb der Aufnahmeobergrenze, wird zu einem Schritt S5 gewechselt und der zweite Betriebsmodus aktiviert. Ist dies nicht der Fall, erfolgt kein solcher Wechsel zum Schritt S5, sondern zum Beispiel ein fortgesetzter Vergleich von Leistungsbedarf und Aufnahmeobergrenze.

Im Schritt S5 wird dann in der vorstehend erläuterten Weise das Antriebssystem 100 aus Figur 3 derart betrieben, dass ein Energiebedarf zur Fortbewegung zumindest teilweise aus dem Energiespeicher 13 bezogen wird.

In Figur 5 ist eine nicht beanspruchte Anordnung 80 gezeigt. Die Darstellung entspricht im Wesentlichen derjenigen aus Figur 1, weshalb auch auf die vorstehenden Ausführungen zu Figur 1 und insbesondere zu den Merkmalen mit den gleichlautenden Bezugszeichen verwiesen wird, die für Figur 5 ebenso gelten.

Die Anordnung 80 unterscheidet sich von derjenigen aus Figur 1 allerdings dahingehend, als dass eine Schienenfahrzeugflotte 11 mit lediglich beispielhaft zwei Schienenfahrzeugen 10 vorgesehen ist. Ebenso ist im Gegensatz zu Figur 1 eine Flottensteuereinrichtung 50 vorgesehen. Die Flottensteuereinrichtung 50, die zum Beispiel als ein Cloud-Server realisiert oder in Form eines Computerprogramms auf einem solchen hinterlegt sein kann, kommuniziert kabellos und vorzugsweise per Mobilfunk mit Kommunikationseinrichtungen 15 der Schienenfahrzeuge 10. Hierüber ist die Flottensteuereinrichtung 50 auch mittelbar mit den Steuereinrichtungen 17 der Schienenfahrzeuge 10 verbunden. Beispielsweise können von der Flottensteuereinrichtung 50 an die jeweiligen Kommunikationseinrichtungen 15 gesendeten Signale an eine jeweilige Steuereinrichtung 17 weitergeleitet werden, z.B. damit diese ein zugehöriges Schienenfahrzeug 10 in einer von der Flottensteuereinrichtung 50 vorgegebenen Weise steuern.

Die Schienenfahrzeuge 10 sind analog zu demjenigen aus Figur 1 bzw. Figur 3 ausgebildet, mit Ausnahme der zusätzlichen Kommunikationseinrichtung 15. Prinzipiell kann bei dieser Ausführungsform aber auch vorgesehen sein, dass die Schienenfahrzeuge 10 keinen elektrischen Energiespeicher 13 umfassen, ansonsten aber vorzugsweise analog zu den Varianten der Figur 1 und Figur 3 ausgebildet sind.

Analog zu den im Zusammenhang mit Figur 3 sowie vorstehend allgemein erläuterten Varianten kann für jedes der Schienenfahrzeuge 10 eine Leistungsbedarfsgröße ermittelt werden. Diese wird im vorliegenden Fall von jedem der Schienenfahrzeuge 10 und vorzugsweise in Echtzeit an die Flottensteuereinrichtung 50 übermittelt. Letztere ermittelt daraus einen kumulierten Energie- bzw. Leistungsbedarf der gesamten Schienenfahrzeugflotte 11, der von der Stromversorgung 14 zu decken ist.

Überschreitet der Leistungsbedarf einen vorbestimmten Schwellenwert (zum Beispiel eine zulässige (Flotten-) Aufnahmeobergrenze), wird die Leistungsaufnahme aus der Oberleitung 13 von zumindest einem der Schienenfahrzeuge 10 begrenzt. Hierfür sendet die Flottensteuereinrichtung 50 ein geeignetes Signal und insbesondere eine Aufnahmeobergrenze zum Beispiel mit einem von 100% verschiedenen Wert an dieses Schienenfahrzeug 10. Bevorzugt wird jedem Schienenfahrzeug 10, sofern dessen Leistungsaufnahme begrenzt werden soll, eine individuelle Aufnahmeobergrenze übermittelt.

## Patentansprüche

1. Schienenfahrzeug (10), das dazu eingerichtet ist, elektrische Energie von einer fahrzeugexternen Stromversorgung (14) aufzunehmen und das wenigstens einen elektrischen Energiespeicher (13) aufweist,
wobei das Schienenfahrzeug (10) ausgestaltet ist, in einem ersten Betriebsmodus mittels aus der Stromversorgung (14) aufgenommener Energie sowie ohne Energie aus dem Energiespeicher (13) fortbewegt zu werden und in einem zweiten Betriebsmodus zumindest teilweise mittels Energie aus dem Energiespeicher (13) fortbewegt zu werden, **dadurch gekennzeichnet, dass** das Schienenfahrzeug eine Steuereinrichtung (17) umfasst, die dazu eingerichtet ist, in Abhängigkeit einer Aufnahmeobergrenze, die eine zulässige Obergrenze der aus der Stromversorgung (14) aufnehmbaren Leistung definiert, den ersten oder den zweiten Betriebsmodus zu aktivieren,
wobei die Aufnahmeobergrenze zum Vermeiden von Leistungsspitzen in der Stromversorgung (14) variabel festlegbar ist.

2. Schienenfahrzeug (10) nach Anspruch 1,
wobei die Steuereinrichtung (17) ferner dazu eingerichtet ist, in Abhängigkeit einer Leistungsbedarfsgröße des Schienenfahrzeugs (10) den ersten oder den zweiten Betriebsmodus zu aktivieren.

3. Schienenfahrzeug (10) nach Anspruch 2,
wobei der zweite Betriebsmodus spätestens dann aktivierbar ist, wenn die Leistungsbedarfsgröße größer als die Aufnahmeobergrenze ist.

4. Schienenfahrzeug (10) nach einem der vorangehenden Ansprüche wobei die Aufnahmeobergrenze basierend auf wenigstens einem der folgenden festlegbar ist:
- einer Fahrervorgabe;
- einer Vorgabe einer fahrzeugexternen Steuereinrichtung;
- einer Vorgabe einer fahrzeuginternen Steuereinrichtung.

5. Schienenfahrzeug (10) nach einem der vorangehenden Ansprüche,
wobei die Aufnahmeobergrenze basierend auf einer Messgröße ermittelt wird, die eine Eigenschaft der fahrzeugexternen Stromversorgung (14) betrifft.

6. Schienenfahrzeug (10) nach Anspruch 5,
wobei die Messgröße eine Spannungsgröße der Stromversorgung (14) oder eine Phasenverschiebungsgröße der Stromversorgung (14) ist und dann, wenn die Spannungsgröße oder die Phasenverschiebungsgröße ein Aktivierungskriterium erfüllen, der zweite Betriebsmodus aktiviert wird.

7. Schienenfahrzeug (10) nach einem der vorangehenden Ansprüche,
wobei der zweite Betriebsmodus aktivierbar ist, wenn eine Momentanleistung der Stromversorgung (14) grösser als ein zulässiger Schwellenwert ist.

8. Schienenfahrzeug (10) nach einem der vorangehenden Ansprüche,
wobei das Schienenfahrzeug (10) in dem zweiten Betriebsmodus mit im Vergleich zum ersten Betriebsmodus reduzierter Traktionsleistung fortbewegbar ist.

9. Verfahren zum Betreiben eines Schienenfahrzeugs (10),
wobei das Schienenfahrzeug (10) dazu eingerichtet ist, elektrische Energie von einer fahrzeugexternen Stromversorgung (14) aufzunehmen und wenigstens einen elektrischen Energiespeicher (13) aufweist,
**dadurch gekennzeichnet, dass** das Verfahren umfasst:
- Aktivieren eines ersten oder eines zweiten Betriebsmodus in Abhängigkeit einer Aufnahmeobergrenze, die eine zulässige Obergrenze der aus der Stromversorgung (14) aufnehmbaren Leistung definiert, wobei die Aufnahmeobergrenze zum Vermeiden von Leistungsspitzen in der Stromversorgung (14) variabel festlegt wird;
wobei das Schienenfahrzeug (10) in dem ersten Betriebsmodus mittels aus der fahrzeugexternen Stromversorgung (14) aufgenommener Energie und ohne Energie aus dem Energiespeicher (13) fortbewegt wird und in dem zweiten Betriebsmodus zumindest teilweise mittels Energie aus dem Energiespeicher (13) fortbewegt wird.

10. Verfahren nach Anspruch 9, wobei das Schienenfahrzeug (10) in dem zweiten Betriebsmodus mit im Vergleich zum ersten Betriebsmodus reduzierter Traktionsleistung fortbewegt wird.

## Claims

1. A rail vehicle (10), which is configured to receive electrical energy from a power supply (14) external to the vehicle and which has at least one electrical energy storage unit (13),
wherein the rail vehicle (10) is configured to be moved along in a first operating mode using energy received from the power supply (14) and without energy from the energy storage unit (13), and in a second operating mode using, at least in part, energy from the energy storage unit (13), **characterised in that** the rail vehicle comprises a control device (17), which is configured to activate the first or the second operating mode in dependence on an upper consumption limit which defines a permissible upper limit of power that may be received from the power supply (14), wherein the upper consumption limit is variably definable in order to prevent power peaks in the power supply (14).

2. The rail vehicle (10) according to claim 1,
wherein the control device (17) is furthermore configured to activate the first or the second operating mode in dependence on a power demand variable of the rail vehicle (10).

3. The rail vehicle (10) according to claim 2,
wherein the second operating mode is activatable, at the latest, when the power demand variable is greater than the upper consumption limit.

4. The rail vehicle (10) according to any one of the preceding claims,
wherein the upper consumption limit is definable based on at least one of the following:
- a driver specification;
- a specification set by a control device external to the vehicle;
- a specification set by a control device internal to the vehicle.

5. The rail vehicle (10) according to any one of the preceding claims,
wherein the upper consumption limit is determined based on a measurement variable that relates to a property of the power supply (14) external to the vehicle.

6. The rail vehicle (10) according to claim 5,
wherein the measurement variable is a voltage variable of the power supply (14) or a phase shift variable of the power supply (14), and the second operating mode is activated if the voltage variable or the phase shift variable satisfy an activation criterion.

7. The rail vehicle (10) according to any one of the preceding claims,
wherein the second operating mode is activated if the momentary power of the power supply (14) is greater than a permissible threshold value.

8. The rail vehicle (10) according to any one of the preceding claims,
wherein the rail vehicle (10) may be moved along in the second operating mode at a reduced traction power in comparison to the first operating mode.

9. A method for operating a rail vehicle (10),
wherein the rail vehicle (10) is configured to receive electrical energy from a power supply (14) external to the rail vehicle and has at least one electrical energy storage unit (13),
**characterised in that** the method comprises:
- activating a first or a second operating mode in dependence on an upper consumption limit which defines a permissible upper limit of the power that may be received from the power supply (14), wherein the upper consumption limit is variably defined in order to prevent power peaks in the power supply (14) ;
wherein, in the first operating mode, the rail vehicle (10) is moved along by means of energy received from the power supply (14) external to the vehicle and without energy from the energy storage unit (13), and, in the second operating mode, is moved along at least in part by means of energy from the energy storage unit (13).

10. The method according to claim 9, wherein the rail vehicle (10), in the second operating mode, is moved along at reduced traction power in comparison to the first operating mode.

## Revendications

1. Véhicule ferroviaire (10) conçu pour absorber de l'énergie électrique d'une alimentation électrique externe (14) et qui présente au moins un accumulateur d'énergie électrique (13),
dans lequel le véhicule ferroviaire (10) est conçu pour être mu dans un premier mode de fonctionnement au moyen d'une énergie reçue de l'alimentation électrique (14) ainsi que sans énergie issue de l'accumulateur électrique (13), et dans un second mode de fonctionnement pour être mu au moins en partie au moyen d'une énergie issue de l'accumulateur électrique (13), **caractérisé en ce que** le véhicule ferroviaire comprend un dispositif de commande (17) conçu pour activer le premier ou le second mode de fonctionnement en fonction d'une limite supérieure de consommation qui définit une limite supérieure de la puissance qui peut être reçue de l'alimentation électrique (14), dans lequel la limite supérieure de consommation peut être fixée de façon variable pour éviter des pics de puissance dans l'alimentation électrique (14).

2. Véhicule ferroviaire (10) selon la revendication 1,
dans lequel le dispositif de commande (17) est conçu, en outre, pour activer le premier ou le second mode de fonctionnement en fonction d'une demande de puissance du véhicule ferroviaire (10).

3. Véhicule ferroviaire (10) selon la revendication 2,
dans lequel le second mode de fonctionnement est activable au plus tard quand la demande de puissance est supérieure à la limite supérieure de consommation.

4. Véhicule ferroviaire (10) selon l'une des revendications précédentes
dans lequel la limite supérieure de consommation peut être fixée sur la base d'au moins l'un des paramètres suivants :
- une consigne du conducteur ;
- une consigne d'un dispositif de commande externe au véhicule ;
- une consigne d'un dispositif de commande interne au véhicule.

5. Véhicule ferroviaire (10) selon l'une des revendications précédentes
dans lequel la limite supérieure de consommation est déterminée sur la base d'une valeur de mesure qui concerne une propriété de l'alimentation électrique externe au véhicule (14).

6. Véhicule ferroviaire (10) selon la revendication 5,
dans lequel la valeur de mesure est une valeur de tension de l'alimentation électrique (14) ou une valeur de déphasage de l'alimentation électrique (14), et le second mode de fonctionnement est activé quand la valeur de tension ou la valeur de déphasage satisfait un critère d'activation.

7. Véhicule ferroviaire (10) selon l'une des revendications précédentes,
dans lequel on peut activer le second mode de fonctionnement si une puissance instantanée de l'alimentation électrique (14) est supérieure à une valeur seuil autorisée.

8. Véhicule ferroviaire (10) selon l'une des revendications précédentes,
dans lequel le véhicule ferroviaire (10) peut être mu avec une puissance de traction réduite dans le second mode de fonctionnement par rapport au premier mode de fonctionnement.

9. Procédé de fonctionnement d'un véhicule ferroviaire (10),
dans lequel le véhicule ferroviaire (10) est conçu pour absorber de l'énergie électrique d'une alimentation électrique externe (14) et qui présente au moins un accumulateur d'énergie électrique (13),
**caractérisé en ce que** le procédé comprend de :
- activer un premier ou un second mode de fonctionnement en fonction d'une limite supérieure de consommation qui définit une limite supérieure de la puissance qu'on peut tirer de l'alimentation électrique externe (14), où la limite supérieure de consommation peut être fixée de façon variable pour éviter des pics de puissance dans l'alimentation électrique (14) ;
dans lequel le véhicule ferroviaire (10) est mu dans le premier mode de fonctionnement au moyen d'une énergie reçue de l'alimentation électrique (14) ainsi que sans énergie issue de l'accumulateur électrique (13), et dans le second mode de fonctionnement au moins en partie au moyen d'une énergie issue de l'accumulateur électrique (13).

10. Procédé selon la revendication 9, dans lequel le véhicule ferroviaire (10) est mu avec une puissance de traction réduite dans le second mode de fonctionnement par rapport au premier mode de fonctionnement.
